# FASCICULE DE BREVET EUROPEEN

(11) **EP 2 835 803 B1**
(45) Date de publication et mention de la délivrance du brevet: **19.07.2017**
(21) Numéro de dépôt: 14179615.1
(22) Date de dépôt: 04.08.2014
(51) Int. Cl.: G21C 17/06, G01T 1/178

(54) **Méthode d'analyse de l'effet de la température sur un combustible irradié**
Methode zur Analyse des Temperatureffekts eines abgebrannten Brennstoffs
Method for analysing the effect of temperature on an irradiated fuel

(30) Priorité: 07.08.2013 FR 1357866
(43) Date de publication de la demande: 11.02.2015
(73) Titulaire: COMMISSARIAT À L'ÉNERGIE ATOMIQUE ET AUX ÉNERGIES ALTERNATIVES, 75015 Paris (FR)
(72) Inventeur: Loubet, Laurent, 84530 VILLELAURE (FR); Lacroix, Brigitte, 84240 LA TOUR D'AIGUES (FR); Noirot, Jean, 13100 AIX EN PROVENCE (FR); Martella, Thierry, 13650 MEYRARGUES (FR)
(74) Mandataire: Esselin, Sophie

(56) Documents cités:
- EP-A1- 2 442 312
- S Béjaoui: "ECRIX-H experiment: Post-irradiation examinations and simulations", , 2012, XP055108850, ISBN: 978-9-26-499174-3 Extrait de l'Internet: URL:https://www.oecd-nea.org/pt/iempt11/po ster/III-1.pdf [extrait le 2014-03-19]
- VENKITESWARAN C N ET AL: "Irradiation Behavior of FBTR Mixed Carbide Fuel at Various Burn-ups", ENERGY PROCEDIA, vol. 7, 2011, pages 227-233, XP028269343, ISSN: 1876-6102, DOI: 10.1016/J.EGYPRO.2011.06.030 [extrait le 2011-08-22]

## Description

L'invention concerne une méthode d'analyse de l'effet de la température sur un combustible irradié et s'applique au domaine de l'analyse du combustible radioactif, plus particulièrement à son analyse par la spectrométrie Gamma.

Le combustible utilisé dans les centrales nucléaires évolue au cours du temps suite à son utilisation. Il est habituel d'analyser cette évolution et pour cela, des éléments de combustibles sont extraits puis examinés dans des laboratoires équipés d'enceintes adaptées pour diminuer l'exposition au rayonnement par exemple à l'aide d'épais mûrs en plomb. Ces enceintes sont appelées cellules de haute activité ou cellules chaudes (« hot cells » en anglais).

Le combustible analysé se présente habituellement sous forme d'un crayon combustible irradié. Des outils et des méthodes ont été développés au fil des années pour les étudier.

Les examens réalisés en cellule de haute activité peuvent être destructifs, une intervention physique sur le crayon étant alors nécessaire. A titre d'exemple, le crayon peut alors être découpé en tronçons pour ce type d'examen.

Alternativement, des examens dits non destructifs désignés par l'acronyme END peuvent également être mis en oeuvre. Dans ce cas, la géométrie du crayon n'est pas modifiée. Les examens non destructifs peuvent être réalisés en mesurant le rayonnement émis par les isotopes résultant de la fission d'un combustible tel que l'uranium deux cent trente-cinq noté 235U dans la suite de la description. A titre d'exemple, la spectrométrie gamma, dont le principe est d'identifier des éléments radioactifs par la mesure de l'énergie des rayonnements (photons) gamma émis, permet d'accéder sans endommagement à des informations directement liées au combustible contenu dans le crayon.

Connaissant les raies gammas des isotopes à étudier, il est possible de faire des mesures par région d'intérêt afin d'obtenir une surface par pas de mesure et par isotope. La répartition des produits de fissions créés par l'irradiation et visible en spectrométrie gamma donne directement accès aux caractéristiques de la colonne combustible comme le début de colonne et la fin de colonne et fournit des informations sur l'irradiation. Dans cette description, l'expression « colonne combustible » désigne un ensemble d'au moins deux pastilles alignées et placées les unes derrière les autres. Un crayon est un ensemble composé d'une colonne de combustible, d'une gaine comprenant ladite colonne et de deux bouchons situés de part et d'autre de la gaine.

Les crayons pour réacteur à eau pressurisée appelés crayon REP sont composés d'une gaine cylindrique contenant une pluralité de pastilles de combustible, positionnées les unes à la suite des autres de manière longitudinale à l'intérieur de ladite gaine. Les pastilles ont une forme cylindrique et sont d'une longueur de l'ordre du centimètre. Elles présentent à leurs extrémités des chanfreins et des cavités (désignées habituellement par le mot anglais « dishing »), un des objectifs étant de permettre l'encaissement les déformations.

La géométrie particulière des pastilles induit des diminutions de matière à leurs extrémités. La conséquence est que les taux de comptage gamma des produits de fission sont plus faibles au voisinage de ces zones. Cette variation du taux de comptage permet ainsi de distinguer les pastilles les unes des autres.

En complément, ces mesures des spectrométries qualitatives peuvent être complétées par des analyses quantitatives. Ainsi, des informations comme le nombre d'atomes de césium cent trente-sept (137Cs) par pastille permettent d'estimer le taux de combustion par pastille.

Des analyseurs multicanaux sont habituellement utilisés pour analyser le spectre gamma. Ces analyseurs présentent comme données de sortie des histogrammes composés de plusieurs canaux. Un canal d'histogramme *j* correspond par exemple à un intervalle d'énergie *Bⱼ.* Les quantités à mesurer des photons gamma sont classées par canaux en fonction de leur niveau d'énergie. L'ensemble des canaux *j* représentatifs d'un spectre composent un histogramme.

La quantité mesurée pour un canal *j* correspond à un nombre d'événements mesurés en un temps donné, appelés aussi coups. Pour chaque canal, les coups mesurés sont comptabilisés, ce qui permet de déterminer la valeur associée auxdits canaux.

Les coups correspondent à des mesures représentatives des interactions entre les particules à mesurer et le capteur utilisé, par exemple le cristal de germanium. En d'autres termes, lorsqu'une particule est détectée par le capteur, un coup est comptabilisé. L'histogramme est habituellement représenté en indiquant le niveau d'énergie en abscisse et le nombre de coups en ordonnées (dans ce cas on obtient un « comptage ») ou en nombre de coups par seconde (on obtient un taux de comptage).

Les examens non destructifs END de crayons de combustible irradiés par spectrométrie gamma permettent notamment de localiser les zones de séparation entre deux pastilles adjacentes, ces zones étant appelées dans la suite de la description zones inter-pastilles. Cependant, un besoin existe de connaître les historiques de température subies par les pastilles de combustible au cours de leur cycle dans le réacteur afin de relier les résultats post-irradiatoires à ces historiques, et d'améliorer la compréhension des phénomènes se produisant en réacteur. Cette connaissance a notamment pour objectif l'amélioration des procédés de fabrication de ces combustibles, pastilles et crayons, le meilleur pilotage du réacteur, voire de la gestion accidentelle.

Il est connu du Document de S.Béjaoui : « ECRIX-H experiment : Post-irradiation examinations and simulations », 2012, XP055108850, ISBN : 978-9-26-499174-3, extrait de l'internet : URL: https://www.ocecd-nea.org:pt/iempt11/poster/III-1.pdf, une méthode d'analyse de l'effet de la température sur au moins un crayon de combustible nucléaire comprenant l'acquisition d'au moins deux profils de comptage associés à des isotopes.

Néanmoins ces méthodes d'examen ne permettent pas d'analyser précisément l'effet de la température sur les crayons, c'est-à-dire à la fois d'identifier et de quantifier les zones du crayon ayant chauffé.

Un des buts de l'invention est de remédier à ces insuffisances de l'état de la technique et d'y apporter des améliorations.

A cet effet l'invention a pour objet une méthode d'analyse de l'effet de la température sur au moins un crayon de combustible nucléaire, un crayon comportant des zones pleines emplies entièrement de combustible et des zones intermédiaires partiellement emplies de combustible. La méthode comprend les étapes suivantes:
- acquisition d'au moins deux profils de comptage, un premier profil de comptage étant associé à un isotope non migrant et un deuxième profil de comptage étant associé à un isotope migrant, lesdits profils étant composés de mesures de spectrométrie effectuées le long du crayon pour ces isotopes ;
- localisation des zones intermédiaires en utilisant le premier profil de comptage ;
- détermination d'un indicateur Ki_1 représentatif d'e la profondeur dans le premier profil d'un creux de mesure localisé au niveau d'une zone intermédiaire i ;
- détermination d'un indicateur Ki_2 représentatif de la profondeur dans le deuxième profil d'un creux de mesure localisé au niveau de la zone intermédiaire i ;
- détermination pour cette zone intermédiaire i d'un indicateur Δi par comparaison des indicateurs Ki_1 et Ki_2, la valeur de l'indicateur Δi étant représentative de l'intensité du réchauffement subi par le crayon pendant sa combustion.

Selon un aspect de l'invention, le crayon est un crayon ou un tronçon de crayons de type REP composé d'une pluralité de pastilles, une zone intermédiaire correspondant à une zone inter-pastilles et les indicateurs Ki_1 et Ki_2 étant représentatifs de la profondeur dans leur profil respectif d'un creux de mesure localisé au niveau de la zone intermédiaire i.

Dans un mode de réalisation, une valeur K_1 correspondant à une moyenne des indicateurs Ki_1 déterminés pour une pluralité de zones intermédiaires est déterminée, l'indicateur Δi étant déterminé par comparaison de K_1 avec Ki_2.

Dans un mode de réalisation, l'indicateur Ki_1 et/ou Ki_2 est déterminé en comparant une valeur théorique Ti avec une valeur localisée au niveau de la zone intermédiaire i et appartenant au profil de mesure associé à cet indicateur, ladite valeur théorique Ti étant choisie de manière à ce qu'elle assure une continuité de comptage entre les zones du profil correspondant aux zones pleines du crayon situées de part et d'autre de la zone intermédiaire i.

Selon un aspect de l'invention, la valeur théorique Ti est obtenue par extrapolation des mesures correspondant aux zones pleines du crayon situées de part et d'autre de la zone intermédiaire i.

L'indicateur Δi est par exemple égal à la différence Ki_1 - Ki_2.

L'isotope non migrant du premier profil de comptage est par exemple le Ru106.

L'isotope migrant du deuxième profil de comptage est par exemple le Cs137.

L'invention a aussi pour objet un système d'analyse d'au moins un crayon de combustible nucléaire comprenant un dispositif de spectrométrie gamma et une unité de traitement mettant en oeuvre la méthode décrite précédemment.

L'invention a aussi pour objet un programme d'ordinateur comportant des instructions pour l'exécution de la méthode décrite précédemment, lorsque le programme est exécuté par un processeur.

D'autres caractéristiques et avantages de l'invention apparaîtront à l'aide de la description qui suit donnée à titre illustratif et non limitatif, faite en regard des dessins annexés parmi lesquels :
- la figure 1 donne un exemple de méthode permettant de localiser les zones inter-pastilles dans un crayon ;
- la figure 2 représente une courbe de comptage du 137Cs mesurée par spectrométrie gamma sur une colonne de combustibles composée d'une pluralité de pastilles ;
- la figure 3 illustre le phénomène de la migration d'isotope ;
- la figure 4 illustre de manière simplifiée le principe de la méthode de mesure et de quantification de la migration d'isotopes selon l'invention ;
- la figure 5 donne un exemple de technique permettant de déterminer les indicateurs Ki_1 et/ou Ki_2 ;
- la figure 6 donne un deuxième exemple de technique pouvant être mise en oeuvre de manière à déterminer les indicateurs Ki_1 et/ou Ki_2.

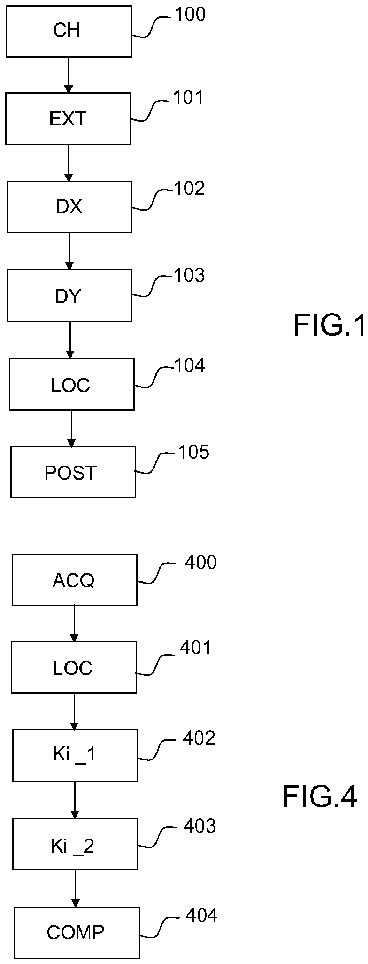

La figure 1 donne un exemple simplifié de méthode permettant de localiser les zones inter-pastilles dans un crayon ou dans un tronçon de crayon REP.

Les mesures acquises par spectrométrie gamma permettent d'obtenir un spectre complet à chaque pas de mesure. Le crayon étudié peut être déplacé transversalement au dispositif de mesure utilisé, de manière à ce que ledit dispositif puisse mesurer toute la colonne combustible. L'inverse est également possible. Dans ce cas, c'est le dispositif qui se déplace. Ce dispositif met en oeuvre une fenêtre de mesures d'une taille habituellement de l'ordre du millimètre au travers de laquelle le rayonnement gamma des photons est mesuré. Pour chaque point de mesure, les surfaces nettes par région d'intérêt sont calculées par exemple pour une quinzaine d'isotopes, ainsi que le comptage total toutes énergies. Cela permet de tracer les répartitions de taux de comptage par isotope. Il est également possible de tracer la répartition du comptage total le long d'une colonne de combustible. Ces répartitions sont appelées « profils de comptage » dans la suite de la description.

Une succession d'étapes peut alors être mise en oeuvre pour localiser les zones inter-pastilles. Cela permet notamment de dénombrer et d'étudier l'évolution de la forme des pastilles au cours de la combustion (i.e. au cours de son cycle en réacteur).

Une première étape 100 sélectionne un profil de comptage associée à un isotope donné. Ce profil doit être exploitable, c'est-à-dire qu'il doit correspondre à une répartition présentant de bonnes caractéristiques en termes statistique.

Une deuxième étape 101 a pour fonction d'éliminer la zone d'extrémité de la colonne à traiter.

Une troisième étape 102 correspond à la sélection d'une plage axiale DX alignée avec la colonne combustible et exprimée en millimètres. Sur cette plage axiale, une moyenne glissante des taux de comptage est calculée. A titre d'exemple, DX = 5 mm.

Une quatrième étape 103 correspond à la sélection d'un seuil de détection DY. Ce seuil permet de discriminer les zones de pastilles. Si le comptage en un point x diffère de plus de DY pourcents de la moyenne glissante calculée pour ce point, le point est considéré comme appartenant à une zone inter-pastille. A titre d'exemple, DY = 5%.

Une cinquième étape 104 acquière la localisation des pastilles trouvées, c'est-à-dire la cote de début et la cote de fin pour chacune d'elle.

Une sixième étape 105 peut être mise en oeuvre de manière optionnelle afin de faire se rejoindre manuellement deux zones qui auraient été considérées comme n'appartenant pas à la même pastille alors que les longueurs des fragments situés de part et d'autre d'une zone inter-pastilles sont significativement inférieures ou supérieures à la longueur attendue (et inversement).

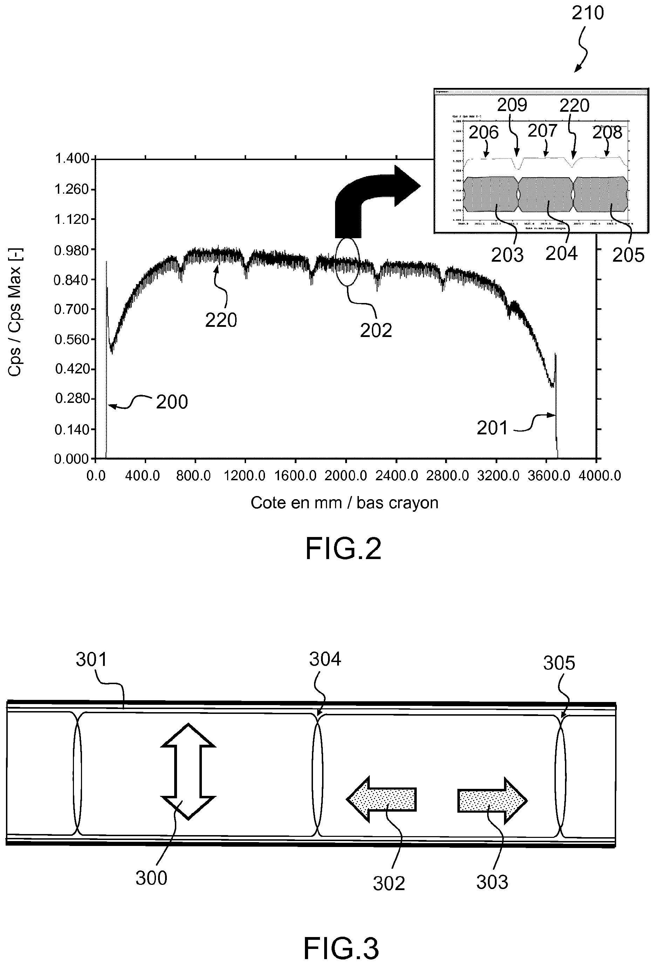

La figure 2 représente une courbe de comptage du 137Cs mesurée par spectrométrie gamma sur une colonne de combustibles composée d'une pluralité de pastilles REP. En abscisse est indiquée la cote en millimètres c'est-à-dire la localisation des différents points de mesure. Le nombre de coups normés (Coups sur Coups Max) mesurés est indiqué en ordonnées.

Comme mentionné précédemment, l'observation du rayonnement d'un produit de fission par spectrométrie gamma permet d'accéder directement aux caractéristiques de la colonne de combustible. Dans cet exemple, le rayonnement du 137Cs a été observé, cette observation permettant de localiser le début de colonne 200 et la fin de colonne 201. En outre, dans cet exemple la géométrie particulière des pastilles comprises dans les crayons REP induit des diminutions de matière à leurs extrémités. Ainsi, le taux de comptage gamma des produits de fission est plus faible au niveau des zones inter-pastilles ce qui permet de distinguer la position des pastilles les unes par rapport aux autres. Une zone 202 de la courbe mesurée a été agrandie 210. Cette zone correspond à une longueur de trois pastilles 203, 204, 205. La courbe du taux de comptage mesuré fait apparaître trois plateaux 206, 207, 208 correspondants aux parties pleines des pastilles. Par ailleurs, deux creux 209, 220 apparaissent et correspondent aux zones inter- pastilles. Il est ainsi possible par analyse de la courbe obtenue d'étudier la géométrie de la colonne de combustible ainsi que le cas échéant la géométrie des pastilles qui les composent. Il est alors possible de recompter les pastilles, de vérifier la fabrication des crayons et de suivre l'allongement de la colonne suite à leur irradiation. La méthode présentée avec la figure 1 peut être utilisée pour cela.

La figure 3 illustre le phénomène de migration d'isotopes. Avec l'augmentation du nombre et de la variété de crayons combustibles traités en cellule de haute activité, un phénomène dit de migration a pu être observé à partir des mesures de spectrométrie gamma. Ce phénomène a notamment été observé sur le 137Cs et le 134 Cs. Il est à noter que cet isotope peut être produit par fission directe de 235U ou par désexcitation du Xénon cent trente-sept 137Xe.

En cas d'augmentation de la température, le phénomène de migration du césium va apparaître. En effet, pour les combustibles REP, à partir d'une température de l'ordre de mille deux cents (1200) degrés Celsius, le césium se déplace en sens inverse du gradient thermique. Ainsi les produits de fissions volatiles vont se déplacer de deux manières. Le mouvement peut se faire radialement 300, c'est-à-dire du centre de la pastille vers la gaine 301 ou bien axialement 302, 303, c'est-à-dire du centre de la pastille vers les zones inter-pastilles 304, 305.

Comme explicité précédemment, les pastilles de combustible d'un crayon REP présentent des évidements à leurs extrémités. Ces évidements conduisent à une diminution de matière espacée régulièrement le long de la colonne combustible. Ces zones inter-pastilles sont alors visibles en spectrométrie, puisqu'elles se traduisent par des diminutions des taux de comptages. Or dans certains cas, et pour certains isotopes tels que ceux du césium, la diminution des taux de comptages attendus dans la zone d'inter-pastilles est peu visible. En effet, le césium peut avoir un comportement migrant. Un tel changement d'allure des profils de comptage de ces isotopes est le signe d'une migration axiale du césium dans les inter-pastilles.

Dans le cadre des techniques de spectrométrie qualitatives existantes, il est possible d'indiquer qu'une migration axiale a probablement eu lieu lorsque la diminution du taux de comptage dans les zones interpastille évolue ou n'a pas la valeur attendue. A titre d'exemple, la migration du 137Cs aux extrémités des pastilles induit un appauvrissement du césium au centre de la pastille et une augmentation en extrémité.

La figure 4 illustre de manière simplifiée le principe de la méthode de mesure et de quantification de la migration d'isotopes selon l'invention. Cette méthode est décrite pour la mesure de crayon.

Dans un premier temps 400, des mesures de spectre gamma sont réalisées le long d'un crayon de combustible ou une colonne combustible comprenant plusieurs pastilles avec un pas de mesure choisi au préalable. Le résultat de ces mesures correspond à un ensemble de spectres gamma, un spectre étant obtenu à chaque pas de mesure. De ces spectres gamma sont extraits deux profils de mesure. Un premier profil est déterminé pour un isotope non migrant et un second profil est déterminé pour un isotope migrant.

Un isotope non migrant est un isotope restant à l'endroit où il a été produit lors de la fission, quelque soit la température à laquelle le combustible a été exposé. Le ruthénium cent six (106Ru) peut être utilisé comme isotope non migrant mais d'autres isotopes non migrants peuvent également être utilisés pour cela, comme le 95Zr, 154Eu ou le 103Rh.

Au contraire, un isotope migrant est un isotope dont la position varie en fonction de la température du combustible. Le césium cent trente-sept (137Cs) peut être utilisé dans le cadre du procédé décrit, mais d'autres isotopes migrants peuvent également utilisés pour cela, comme le 134Cs.

Ces deux profils résultent respectivement de l'extraction de mesures de l'ensemble des spectres gamma mesurés pour l'isotope auxquels ils sont associés.

Une deuxième étape 401 est mise en oeuvre de manière à localiser les zones intermédiaires et ainsi les différencier des zones pleines. Une zone d'un crayon est dite pleine lorsqu'elle est entièrement remplie de matière et une zone intermédiaire est une zone d'un crayon qui n'est pas entièrement remplie de matière. Une zone intermédiaire correspond donc à une zone inter-pastilles ou bien à une zone correspondant à l'extrémité d'un crayon.

A titre d'exemple, une zone intermédiaire entre deux pastilles d'un crayon REP comprend de l'ordre de dix pourcents de moins de matière par rapport à une zone pleine. Une telle zone est aussi appelée zone inter-pastilles. Dans la suite de la description, il est question de zones inter-pastilles mais l'invention peut être appliquée sur d'autres zones intermédiaires telles que celle que l'on trouve à chaque extrémité du crayon.

Pour localiser précisément les zones intermédiaires, le profil de comptage de l'isotope non migrant est utilisé. L'analyse des mesures de rayonnement de l'isotope de non migrant permet d'obtenir une valeur de référence représentative du différentiel d'émission de rayons gamma entre une zone pleine et une zone intermédiaire. A titre d'exemple, la méthode décrite précédemment à l'aide de la figure 1 peut être utilisée pour effectuer cette analyse.

Une troisième étape 402 a pour objectif de déterminer un indicateur Ki_1 permettant de quantifier la diminution de matière au niveau des zones intermédiaires localisées à l'étape précédente 401. Cet indicateur correspond à une comparaison entre une valeur interpolée Ti_1 pour cette zone et la valeur du profil de mesure de l'isotope de non migrant.

La valeur interpolée Ti_1 correspond à une valeur qui aurait pu être mesurée sur la zone intermédiaire si celle-ci était remplie de matière. Pour les étapes suivantes, Il est possible d'utiliser l'ensemble des valeurs de Ki_1 déterminées pour chaque zone inter-pastilles d'indice i ou bien de déterminer une unique valeur K_1 pour l'ensemble de ces zones, cette unique valeur correspondant à une moyenne des valeurs Ki_1.

Une quatrième étape 403 a pour objectif de déterminer un deuxième indicateur Ki_2 associé aux zones intermédiaires localisées à l'étape précédente 401. Cet indicateur correspond à une comparaison entre une valeur interpolée Ti_2 obtenue pour ces zones et la valeur du profil de mesure de l'isotope migrant.

Les indicateurs Ki_1 et Ki_2 sont représentatifs de la profondeur des creux de mesure de coups observés dans les profils de comptage au niveau des zones intermédiaires.

Les indicateurs Ki_1 et Ki_2 peuvent être calculés de différentes manières et des exemples sont donnés plus loin dans la description. Les valeurs Ti_1 et Ti_2 mentionnées pour ces deux indicateurs peuvent être déterminées en estimant la valeur des plateaux de deux pastilles adjacentes puis en interpolant de manière à faire se rejoindre ces deux plateaux, c'est-à-dire de manière à avoir une continuité des comptages qui aurait été observée en l'absence d'une zone intermédiaire à cet endroit.

Ensuite, une cinquième étape 404 met en oeuvre une comparaison entre les indicateurs Ki_1 et Ki_2 déterminés respectivement avec les profils de mesures de l'isotope non migrant et de l'isotope migrant. La comparaison de ces deux indices permet de comparer la profondeur des creux du profil de comptage associé à l'isotope migrant avec la profondeur des creux du profil de comptage associé à l'isotope non migrant. Pour une zone intermédiaire donnée, plus la différence de profondeur des creux estimée pour chaque profil de comptage est importante et plus le phénomène de migration a été important à ce niveau du crayon ou de la colonne de combustible.

Cette comparaison peut être mise en oeuvre à l'aide d'une simple différence Δ = Ki_1 - Ki_2 ou d'une différence relative (Ki_1 - Ki_2)/Ki 1. Dans ce cas, plus la migration est importante et plus la valeur de Δ est importante. La valeur obtenue suite à la comparaison des deux indices permet de détecter qu'une migration a eu lieu mais également de connaître voire de chiffrer l'importance de cette migration. Ainsi, l'influence de la température sur le combustible peut être analysée finement. Il est aussi possible de déterminer un historique de l'évolution des températures dans un réacteur nucléaire.

La différence Δ peut être comparée à une valeur seuil prédéfinie. Pour les points d'indice i pour lesquels ladite valeur seuil n'est pas dépassée, il peut être déduit que la température n'a pas dépassé une température donnée associé à ce seuil, par exemple 1200°C, sans distinguer à quelle température le crayon a été exposé à cet endroit.

Pour les autres points pour lesquels la différence dépasse la valeur seuil prédéfinie, il est considéré que la température du crayon a atteint la température associée à la valeur seuil prédéfinie, par exemple 1200°C. En outre, les valeurs de la différence peuvent être chiffrées de manière à évaluer le temps pendant lequel la température en ces points a dépassé la valeur de seuil préfinie. Pour cela, une table de correspondance peut être utilisée, ladite table associant une valeur de la différence Δ à une durée d'exposition.

Avantageusement, cette méthode permet d'étudier l'évolution du combustible en évitant d'avoir recours à des coupes. Ainsi, des examens non destructifs peuvent être mis en oeuvre au lieu d'intervenir physiquement sur le combustible. S'il est malgré tout nécessaire de procéder à une découpe, par exemple pour réaliser d'autres analyses, la méthode permet de connaître exactement la localisation du point de découpe.

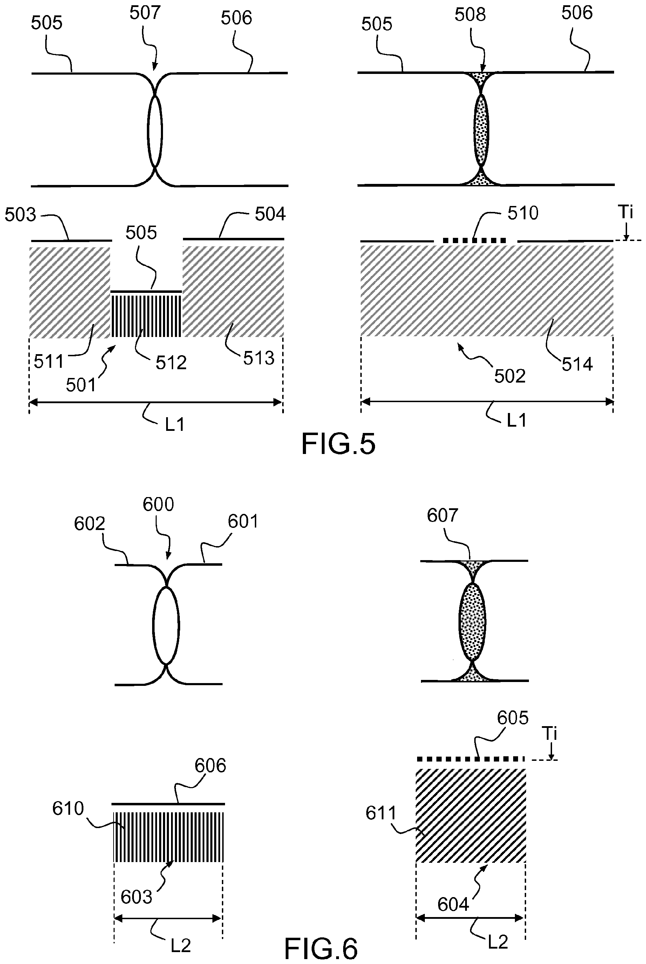

La figure 5 donne un exemple de technique permettant de déterminer les indicateurs Ki_1 et/ou Ki_2.

Les indicateurs Ki_1 et/ou Ki_2 sont déterminés pour les zones intermédiaires identifiées suite à l'étape 401. Le principe utilisé repose sur la comparaison des taux de comptages mesurés dans une zone intermédiaire par rapport à ce qu'auraient été ces taux de comptages en l'absence d'une telle zone.

Sur la figure 5 apparaissent graphiquement et de manière simplifiée les taux de comptage obtenu au voisinage d'une zone inter-pastilles 507 située entre deux pastilles 505, 506 d'un crayon ou d'un tronçon REP. Un premier schéma 501 représente l'évolution du taux mesuré. Deux paliers de comptages 503, 504 correspondent à des zones pleines des pastilles et une diminution 505 du comptage apparaît au niveau de la zone inter-pastilles.

Un second schéma 502 représente l'évolution du taux de comptage après détermination d'une valeur théorique Ti destinée à rehausser 510 le taux de comptage mesuré dans la zone intermédiaire. Ce rehaussement est obtenu par exemple par interpolation. Une régression linéaire des points de mesures dans les zones de pastilles peut être utilisée pour cela. Ceci permet de réaliser une interpolation réaliste dans la zone inter-pastilles.

L'objectif de la détermination d'une valeur théorique par rehaussement des mesures de comptage est d'obtenir une valeur de comptage qui aurait pu être mesurée sur la zone intermédiaire si celle-ci était pleine 508.

Les indicateurs Ki_1 et/ou Ki_2 peuvent être déterminés comme étant le rapport Mi/Pi entre la surface Mi correspondant à la somme des surfaces 511, 512 et 513 et la surface Pi1 514. Mi et Pi sont définis respectivement par les surfaces situées sous les courbes de comptage avant rehaussement et après rehaussement sur une largeur L1 choisie telle que lesdites surfaces prennent en compte une portion des mesures effectuées pour les zones pleines des pastilles. Alternativement, Ki_1 et/ou Ki_2 peuvent être déterminés à l'aide de l'expression suivante : (Mi-Pi)/Pi.

La figure 6 donne un deuxième exemple de technique pouvant être mise en oeuvre de manière à déterminer les indicateurs Ki_1 et/ou Ki_2.

Pour cette alternative, le principe utilisé repose sur la comparaison des taux de comptages mesurés dans une zone intermédiaire par rapport à ce qu'auraient été ces taux de comptages en l'absence d'une telle zone. A la différence de la technique présentée avec la figure 5, les mesures effectuées au niveau des zones pleines ne sont pas prise en compte. La figure 6 illustre schématiquement le taux de comptage obtenu au niveau d'une zone inter-pastilles 600 situé entre deux pastilles 601, 602 d'un crayon ou d'un tronçon REP. Un premier schéma 603 représente le taux de comptage 606 mesuré dans la zone intermédiaire. Un second schéma 604 représente l'évolution du taux de comptage après détermination d'une valeur théorique destinée à rehausser 605 le taux de comptage mesuré dans la zone intermédiaire de manière à obtenir une valeur de comptage qui aurait pu être mesurée sur la zone intermédiaire si celle-ci était pleine 607.

Les indicateurs Ki_1 et/ou Ki_2 sont obtenus en déterminant le rapport entre la somme des surfaces 610 et 611, lesdites surfaces correspondant aux surfaces situées respectivement sous les courbes de comptage obtenues avant rehaussement et après rehaussement sur une largeur L2, ladite largeur étant choisie telle que les surfaces sélectionnées ne prennent pas en compte les mesures effectuées pour les zones pleines des pastilles.

## Revendications

1. Méthode d'analyse de l'effet de la température sur au moins un crayon de combustible nucléaire, un crayon comportant des zones pleines emplies entièrement de combustible et des zones intermédiaires partiellement emplies de combustible, ladite méthode d'analyse étant implémentée par ordinateur et comprenant les étapes suivantes:
- acquisition (400) d'au moins deux profils de comptage, un premier profil de comptage étant associé à un isotope non migrant et un deuxième profil de comptage étant associé à un isotope migrant, lesdits profils étant composés de mesures de spectrométrie effectuées le long du crayon pour ces isotopes ;
- localisation (401) des zones intermédiaires en utilisant le premier profil de comptage ;
- détermination (402) d'un indicateur Ki_1 représentatif de la profondeur dans le premier profil d'un creux de mesure localisé au niveau d'une zone intermédiaire i ;
- détermination (403) d'un indicateur Ki_2 représentatif de la profondeur dans le deuxième profil d'un creux de mesure localisé au niveau de la zone intermédiaire i ;
- détermination (404) pour cette zone intermédiaire i d'un indicateur Δi par comparaison des indicateurs Ki_1 et Ki_2, la valeur de l'indicateur Δi étant représentative de l'intensité du réchauffement subi par le crayon pendant sa combustion.

2. Méthode selon la revendication 1 dans laquelle le crayon est un crayon ou un tronçon de crayons de type REP composé d'une pluralité de pastilles, une zone intermédiaire correspondant à une zone inter-pastilles et les indicateurs Ki_1 et Ki_2 étant représentatifs de la profondeur dans leur profil respectif d'un creux de mesure localisé au niveau de la zone intermédiaire i.

3. Méthode selon l'une des revendications précédentes dans laquelle une valeur K_1 correspondant à une moyenne des indicateurs Ki_1 1 déterminés pour une pluralité de zones intermédiaires est déterminée, l'indicateur Δi étant déterminé par comparaison de K_1 avec Ki_2.

4. Méthode selon l'une des revendications précédentes dans laquelle l'indicateur Ki_1 et/ou Ki_2 est déterminé en comparant une valeur théorique Ti avec une valeur localisée au niveau de la zone intermédiaire i et appartenant au profil de mesure associé à cet indicateur, ladite valeur théorique Ti étant choisie de manière à ce qu'elle assure une continuité de comptage entre les zones du profil correspondant aux zones pleines du crayon situées de part et d'autre de la zone intermédiaire i.

5. Méthode selon la revendication 4 dans laquelle la valeur théorique Ti est obtenue par extrapolation des mesures correspondant aux zones pleines du crayon situées de part et d'autre de la zone intermédiaire i.

6. Méthode selon l'une des revendications précédentes dans laquelle l'indicateur Δi est égal à la différence Ki_1 - Ki_2.

7. Méthode selon l'une des revendications précédentes dans lequel l'isotope non migrant du premier profil de comptage est le Ru106.

8. Méthode selon l'une des revendications précédentes dans lequel l'isotope migrant du deuxième profil de comptage est le Cs137.

9. Système d'analyse d'au moins un crayon de combustible nucléaire comprenant un dispositif de spectrométrie gamma et une unité de traitement mettant en oeuvre le procédé selon l'une quelconque des revendications précédentes.

10. Programme d'ordinateur comportant des instructions pour l'exécution de la méthode selon l'une quelconque des revendications 1 à 8, lorsque le programme est exécuté par un processeur.

## Patentansprüche

1. Verfahren zum Analysieren des Effekts von Temperatur auf mindestens einen Kernbrennstab, wobei ein Stab völlig mit Brennstoff gefüllte Vollzonen und teilweise mit Brennstoff gefüllte Zwischenzonen umfasst, wobei das Analyseverfahren von einem Computer implementiert wird und die folgenden Schritte umfasst:
- Erfassen (400) von mindestens zwei Zählprofilen, wobei ein erstes Zählprofil mit einem nicht migrierenden Isotop assoziiert ist und wobei ein zweites Zählprofil mit einem migrierenden Isotop assoziiert ist, wobei die Profile aus entlang dem Stab für diese Isotope durchgeführten Spektrometriemessungen zusammengesetzt sind;
- Suchen (401) von Zwischenzonen anhand des ersten Zählprofils;
- Bestimmen (402) eines Indikators Kr_1, der die Tiefe im ersten Profil einer Messvertiefung repräsentiert, die sich in der Nähe einer Zwischenzone i befindet;
- Bestimmen (403) eines Indikators Ki_2, der die Tiefe im zweiten Profil einer Messvertiefung repräsentiert, die sich in der Nähe einer Zwischenzone i befindet;
- Bestimmen (404), für die Zwischenzone i, eines Indikators Δi durch Vergleichen der Indikatoren Ki_1 und Ki_2, wobei der Wert des Indikators Δi die Intensität der von dem Stab bei seiner Verbrennung erfahrenen Erhitzung repräsentiert.

2. Verfahren nach Anspruch 1, wobei der Stab ein Stab oder ein Stababschnitt des REP-Typs bestehend aus einer Vielzahl von Pellets ist, wobei eine Zwischenzone einer Pelletzwischenzone entspricht und wobei die Indikatoren Ki_1 und Ki_2 die Tiefe in ihrem jeweiligen Profil einer Messvertiefung repräsentieren, die sich in der Nähe der Zwischenzone i befindet.

3. Verfahren nach einem der vorherigen Ansprüche, wobei ein Wert K_1 entsprechend einem Mittel der für eine Vielzahl von Zwischenzonen bestimmten Indikatoren Ki_1 bestimmt wird, wobei der Indikator Δi durch Vergleichen von K_1 mit Ki_2 bestimmt wird.

4. Verfahren nach einem der vorherigen Ansprüche, wobei der Indikator Ki_1 und/oder Ki_2 durch Vergleichen eines theoretischen Werts Ti mit einem Wert in der Nähe der Zwischenzone i bestimmt wird, der zu dem mit dem Indikator assoziierten Messprofil gehört, wobei der theoretische Wert Ti so gewählt wird, dass er eine Messkontinuität zwischen den Zonen des Profils entsprechend den Vollzonen des Stabs bereitstellt, die sich auf beiden Seiten der Zwischenzone i befinden.

5. Verfahren nach Anspruch 4, wobei der theoretische Wert Ti durch Extrapolieren von Messungen entsprechend den Vollzonen des Stabs erhalten wird, die sich auf beiden Seiten der Zwischenzone i befinden.

6. Verfahren nach einem der vorherigen Ansprüche, wobei der Indikator Δi gleich der Differenz Ki_1 - Ki_2 ist.

7. Verfahren nach einem der vorherigen Ansprüche, wobei das nicht migrierende Isotop des ersten Meßprofils Ru106 ist.

8. Verfahren nach einem der vorherigen Ansprüche, wobei das migrierende Isotop des zweiten Messprofils Cs137 ist.

9. System zum Analysieren von mindestens einem Kernbrennstoff, umfassend eine gamma-Spektrometrievorrichtung und eine Verarbeitungseinheit, die das Verfahren nach einem der vorherigen Ansprüche implementieren.

10. Computerprogramm, das Befehle zum Ausführen des Verfahrens nach einem der Ansprüche 1 bis 8 beinhaltet, wenn das Programm von einem Prozessor ausgeführt wird.

## Claims

1. A method for analysing the effect of temperature on at least one nuclear fuel rod, a rod comprising packed zones completely filled with fuel and intermediate zones partially filled with fuel, said analysing method being implemented by computer and comprising the following steps:
- acquiring (400) at least two metering profiles, a first metering profile being associated with a non-migrating isotope and a second metering profile being associated with a migrating isotype, said profiles being made up of spectrometry measurements carried out along the rod for these isotopes;
- locating (401) intermediate zones using said first metering profile;
- determining (402) an indicator Ki_1 representing the depth in said first profile of a measurement dip located in the vicinity of an intermediate zone i;
- determining (403) an indicator Ki_2 representing the depth in said second profile of a measurement dip located in the vicinity of an intermediate zone i;
- determining (404), for said intermediate zone i, an indicator Δi by comparing said indicators Ki_1 and Ki_2, the value of said indicator Δi representing the intensity of the heating experienced by the rod during its combustion.

2. The method according to claim 1, wherein said rod is a rod or a section of rods of the PWR type made up of a plurality of pellets, an intermediate zone corresponding to an inter-pellet zone and said indicators Ki_1 and Ki_2 representing the depth in their respective profile of a measurement dip located in the vicinity of said intermediate zone i.

3. The method according to any one of the preceding claims, wherein a value K_1 corresponding to an average of the indicators Ki_1 determined for a plurality of intermediate zones is determined, said indicator Δi being determined by comparing K_1 to Ki_2.

4. The method according to any one of the preceding claims, wherein said indicator Ki_1 and/or Ki_2 is determined by comparing a theoretical value Ti to a value located in the vicinity of said intermediate zone i and belonging to the measurement profile associated with said indicator, said theoretical value Ti being selected so that it provides metering continuity between the zones of the profile corresponding to the packed zones of the rod located either side of said intermediate zone i.

5. The method according to claim 4, wherein said theoretical value Ti is obtained by extrapolating measurements corresponding to the packed zones of the rod located on either side of said intermediate zone i.

6. The method according to any one of the preceding claims, wherein said indicator Δi is equal to the difference Ski_1 - Ki_2.

7. The method according to any one of the preceding claims, wherein the non-migrating isotope of said first metering profile is Ru106.

8. The method according to any one of the preceding claims, wherein the migrating isotope of said second metering profile is Cs137.

9. A system for analysing at least one nuclear fuel rod, comprising a gamma spectrometry device and a processing unit implementing the method according to any one of the preceding claims.

10. A computer program comprising instructions for executing the method according to any one of claims 1 to 8, when said program is executed by a processor.
